## Europäisches Patentamt

## European Patent Office

## Office européen des brevets

(11) Numéro de publication: **0 296 029**
**A1**

## (12) DEMANDE DE BREVET EUROPEEN

(21) Numéro de dépôt: **88401406.9**

(22) Date de dépôt: **09.06.88**

(51) Int. Cl.4: **G 01 N 9/12**
**G 01 G 5/02, G 01 G 17/04**

(30) Priorité: **12.06.87 FR 8708209**

(43) Date de publication de la demande:
**21.12.88 Bulletin 88/51**

(84) Etats contractants désignés:
**BE CH DE GB IT LI NL**

(71) Demandeur: **COMMISSARIAT A L'ENERGIE ATOMIQUE**
**31/33, rue de la Fédération**
**F-75015 Paris (FR)**

(72) Inventeur: **Boullet, Joseph**
**16, Croix d'Andolle**
**F-64440 Nanteuil Le Haudouin (FR)**

(74) Mandataire: **Mongrédien, André et al**
**c/o BREVATOME 25, rue de Ponthieu**
**F-75008 Paris (FR)**

(54) **Appareil de mesure automatique du poids apparent d'une boue chargeant un liquide et systeme de mesure automatique de l'indice de ponsar d'une telle boue utilisant l'appareil.**

(57) Appareil de mesure automatique du poids apparent d'une boue chargeant un liquide et système de mesure automatique de l'indice de PONSAR d'une telle boue, utilisant l'appareil.

Le poids apparent d'un litre de liquide clarifié est obtenu à l'aide de moyens de type opto-électronique (22, 106, 108) permettant la mesure de la différence entre deux niveaux de liquide clarifié dans un réservoir (18), correspondant respectivement à l'atteinte dans celui-ci d'une position d'équilibre par un flacon (20) successivement rempli de liquide chargé de boue et de liquide clarifié. Des moyens de détection (52, 54) permettent de mesurer le volume de boue décantée en une demi-heure dans une éprouvette (28) remplie de 1 litre de liquide chargé de boue et de 1,5 litre de liquide clarifié. Le calcul du rapport volume/poids donne ensuite l'indice de PONSAR.

Application à la conduite de stations d'épuration.

FIG. 2

EP 0 296 029 A1

## Description

## APPAREIL DE MESURE AUTOMATIQUE DU POIDS APPARENT D'UNE BOUE CHARGEANT UN LIQUIDE ET SYSTEME DE MESURE AUTOMATIQUE DE L'INDICE DE PONSAR D'UNE TELLE BOUE, UTILISANT L'APPAREIL

La présente invention concerne un appareil de mesure automatique du poids apparent d'une boue chargeant un liquide et un système de mesure automatique de l'Indice de PONSAR d'une telle boue, utilisant l'appareil. Elle s'applique notamment à la conduite de stations d'épuration d'eaux usées fonctionnant sur le principe des boues activées (épuration biologique).

On connaît déjà, par le brevet FR-A-2 284 108, un dispositif de mesure de l'indice de PONSAR d'une boue chargeant un liquide, indice dont on donnera par la suite une définition. Un tel dispositif est également commercialisé par la société HYDROCURE.

Ce dispositif présente l'inconvénient d'être manuel, nécessitant ainsi une intervention assez longue, et donc coûteuse, d'un opérateur.

On connaît également par la demande de brevet français n° 8 511 235 du 23 Juillet 1985, appelée par la suite "document I", un appareil de mesure automatique du poids apparent d'une boue chargeant un liquide et un système de mesure automatique de l'indice de PONSAR d'une telle boue, utilisant l'appareil. Ce dernier comprend un selfmètre pour déterminer le poids apparent de la boue par des mesures d'inductance.

La présente invention a pour but de remédier à l'inconvénient mentionné plus haut en proposant un appareil de mesure automatique du poids apparent d'une boue chargeant un liquide et un système de mesure automatique de l'indice de PONSAR d'une telle boue, utilisant ledit appareil, ce dernier comprenant des moyens de type optoélectronique pour mesurer le poids apparent de la boue, moyens qui permettent d'aboutir à un appareil et à un système plus simples que ceux qui sont décrits dans le document I.

De façon précise, la présente invention a tout d'abord pour objet un appareil de mesure du poids apparent d'une boue chargeant un liquide, caractérisé en ce qu'il comprend :

- un récipient,
- un flacon mobile, muni d'un moyen lui permettant d'atteindre, à partir du fond du récipient rempli de liquide clarifié, deux positions d'équilibre correspondant respectivement au flacon rempli de liquide clarifié et au flacon rempli de liquide chargé de boue, le flacon étant en outre conçu pour s'élever, lorsqu'il est rempli de liquide clarifié ou de liquide chargé de boue, dans le récipient rempli de liquide clarifié, seulement lorsque ledit flacon est submergé,
- des moyens de remplissage en liquide clarifié, de remplissage en liquide chargé de boue et de vidange du flacon,
- des moyens de remplissage en liquide clarifié du récipient, jusqu'à ce que le flacon, rempli de liquide clarifié ou de liquide chargé de boue, ait atteint la position d'équilibre correspondante, et de vidange de ce récipient,
- des premiers moyens de détection, de type optoélectronique, aptes à fournir un signal électrique fonction du niveau de liquide clarifié dans le récipient, et
- un système électronique de traitement prévu pour déterminer le poids apparent d'un volume de liquide chargé de boue, pesé dans le liquide clarifié, à partir de signaux électriques correspondant aux niveaux de liquide clarifié dans le récipient, lorsque le flacon est rempli respectivement de liquide chargé de boue et de liquide clarifié, en commandant de façon appropriée les moyens de remplissage et de vidange du récipient et du flacon.

De préférence, le flacon a un fond conique muni d'un lest et prolongé supérieurement par une paroi cylindrique dont le bord supérieur est légèrement plus haut du côté intérieur que du côté extérieur du flacon. Le fond conique du flacon contribue à l'évacuation de bulles d'air lors de l'immersion du flacon dans le liquide clarifié. L'abaissement dudit bord est prévu pour empêcher la sortie de liquide chargé de boue du flacon lorsque celui-ci en est rempli et immergé dans le liquide clarifié du récipient en cours de remplissage. Le lest est prévu pour empêcher l'élévation du flacon, rempli de liquide clarifié, dans le récipient en cours de remplissage, avant la submersion dudit flacon.

De préférence également, le flacon est en un matériau qui, lorsqu'il est plongé dans le liquide clarifié, n'absorbe pas celui-ci ou, au contraire, se sature rapidement en ce liquide clarifié. Par "matériau qui se sature rapidement", on entend un matériau qui se sature en un temps $t$ très court devant le temps $t_1$ pendant lequel le flacon reste dans le liquide clarifié du récipient ($t$ inférieur à environ $0,1\ t_1$ par exemple).

Dans un mode de réalisation avantageux de l'appareil objet de l'invention, cet appareil comprend en outre des moyens de support du flacon et de limitation des déplacements de ce flacon en direction du haut du récipient.

Dans une réalisation avantageuse, l'appareil objet de l'invention comprend en outre une sonde à électrodes, prévue pour informer le système électronique de traitement du remplissage du flacon, cette sonde étant déplaçable et rendue rigidement solidaire d'un conduit prévu pour les remplissages et la vidange du flacon.

Pour déplacer la sonde et le conduit, on peut utiliser un vérin à double effet (premier vérin).

Dans une réalisation préférée de cet appareil, ledit moyen dont est muni le flacon est une tige dont l'extrémité inférieure est rigidement solidaire du flacon et dont la longueur est prévue pour dépasser le niveau maximum de liquide clarifié susceptible d'être contenu dans le récipient.

De préférence, l'appareil comprend des deuxièmes moyens de détection, prévus pour détecter l'atteinte par le flacon, rempli de liquide clarifié ou de liquide chargé de boue, de la position d'équilibre correspondante, en vue de commander l'arrêt du remplissage du récipient.

Ces deuxièmes moyens de détection peuvent comprendre un moyen photo-émetteur, un moyen photodétecteur et ladite tige, l'extrémité supérieure de la tige étant prévue pour dévier un faisceau lumineux provenant du moyen photoémetteur en direction du moyen photodétecteur, lorsque cette extrémité supérieure rencontre ce faisceau lumineux.

De préférence également, les premiers moyens de détection comprennent un flotteur prévu pour flotter dans le récipient, à la surface du liquide clarifié, lorsque le récipient en contient, et un ensemble-détecteur comportant au moins un photo-émetteur et au moins un photodétecteur, rendus solidaires et placés en regard l'un de l'autre, de part et d'autre du récipient, le flotteur étant opaque à la lumière que chaque photo-émetteur est capable d'émettre, le récipient étant transparent à cette lumière, et des moyens de déplacement de cet ensemble-détecteur, aptes à déplacer celui-ci le long du récipient, sensiblement à partir du haut de ce dernier, et commandés par le système électronique de traitement, le photodétecteur étant destiné à informer ce système électronique de traitement de la position du flotteur.

La présente invention concerne également un système de mesure de l'indice de PONSAR d'une boue chargeant un liquide, caractérisé en ce qu'il comprend :
- l'appareil de mesure du poids apparent qui est également objet de l'invention,
- un autre récipient,
- des moyens de remplissage en liquide clarifié, de remplissage en liquide chargé de boue et de vidange de cet autre récipient,
- des troisièmes moyens de détection, aptes à fournir d'autres signaux électriques, fonctions du niveau de boue décantée dans ledit autre récipient préalablement rempli de liquide clarifié et de liquide chargé de boue,
et en ce que le système électronique de traitement est en outre prévu pour déterminer, à partir de ces autres signaux, le volume de boue décantée dans ledit autre récipient, correspondant à une quantité prédéterminée de liquide chargé de boue, et pour déterminer également l'indice de PONSAR de la boue, en utilisant ledit poids apparent et ledit volume de boue décantée, en commandant de façon appropriée les moyens de remplissage et de vidange.

Selon un mode de réalisation préféré du système de mesure objet de l'invention, les troisièmes moyens de détection comprennent un autre ensemble-détecteur comportant au moins un photo-émetteur et au moins un photodétecteur, rendus solidaires et placés en regard l'un de l'autre, de part et d'autre dudit autre récipient, ce dernier et le liquide clarifié étant transparents à la lumière que chaque photo-émetteur est capable d'émettre et la boue étant opaque à cette lumière, et des moyens de déplacement de cet autre ensemble-détecteur, aptes à déplacer celui-ci le long dudit autre récipient, sensiblement à partir du fond de ce dernier, et commandés par le système électronique de traitement, le photodétecteur dudit autre ensemble-détecteur étant destiné à informer ce système électronique de traitement de la position de la surface de séparation entre la boue décantée et le liquide clarifié dans ledit autre récipient.

De préférence, la quantité prédéterminée de liquide chargé de boue résultant de l'adjonction à une quantité donnée de liquide clarifié atteignant un premier niveau dans ledit autre récipient, d'une quantité donnée de liquide chargé de boue atteignant un second niveau dans ledit autre récipient, le système de mesure comprend en outre une autre sonde à électrodes déplaçable entre ces premier et second niveaux, et prévue pour informer le système électronique de traitement de l'atteinte, par le liquide, successivement de ces premier et second niveaux, en vue de commander l'arrêt des remplissages correspondants.

Enfin, le système de mesure objet de l'invention peut comprendre en outre un autre vérin à double effet, prévu pour déplacer ladite autre sonde entre les premier et second niveaux.

L'invention sera mieux comprise à la lecture de la description qui suit, d'exemples de réalisation donnés à titre purement indicatif et nullement limitatif, en référence aux dessins annexés sur lesquels :
- la figure 1 est une vue schématique d'un mode de réalisation particulier du système de mesure automatique de l'indice de PONSAR, objet de l'invention, et
- la figure 2 est une vue schématique d'un dispositif de mesure du volume de boue décantée et d'un dispositif de mesure du poids apparent faisant partie de ce système, et
- la figure 3 est une vue schématique de circuits hydrauliques que comporte ce système.

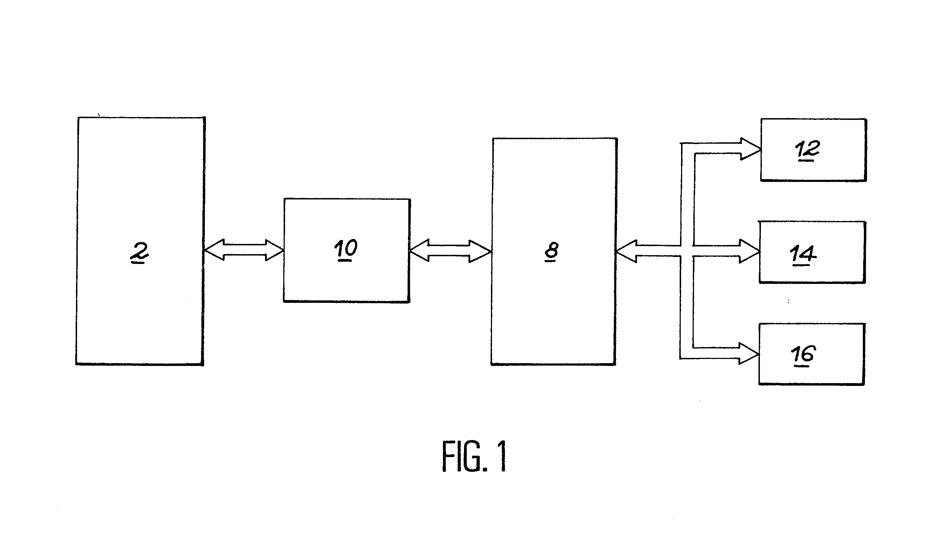

Sur la figure 1, on a représenté schématiquement un mode de réalisation particulier du système objet de l'invention, destiné à la mesure automatique de l'indice de PONSAR.

Cet indice, qui permet de contrôler la qualité des boues des stations d'épuration, et ce, à tous les stades du processus d'épuration, est défini comme le rapport V/P dans lequel V représente le volume tassé en une demi-heure (généralement exprimé en millilitres), c'est-à-dire le volume de dépôt obtenu après décantation pendant une demi-heure d'un litre de liquide chargé de boue dans un litre et demi de liquide clarifié, et P représente le poids apparent (ou plus exactement la masse apparente), exprimé en grammes, d'un litre de liquide chargé de boue, pesé dans le même liquide clarifié.

Le liquide est de l'eau dans le cas d'une station d'épuration et l'on prend dans ce qui suit l'exemple d'une telle station.

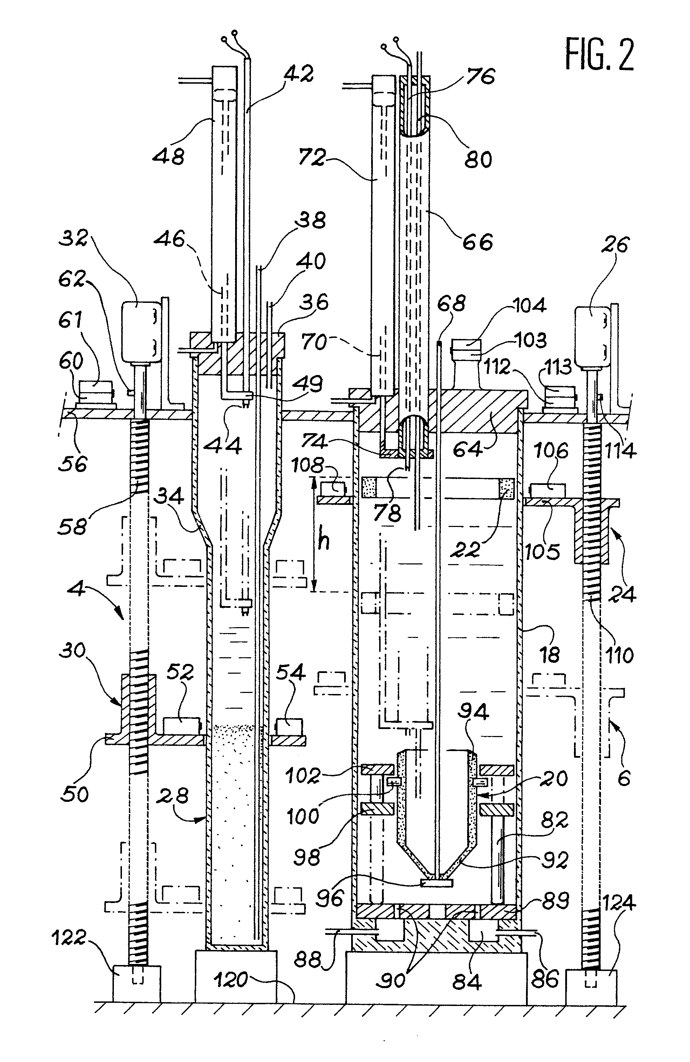

Le système représenté sur la figure 1 comprend :
- un ensemble 2 comportant un dispositif 4 pour la mesure du volume V (figure 2) et un dispositif 6 pour la mesure du poids P (figure 2), cet ensemble pouvant être placé dans une armoire dans laquelle peuvent être également placées une pompe, des électrovannes, et des moteurs prévus pour le fonctionnement de ces dispositifs,

- un ensemble informatique 8 prévu pour commander les dispositifs et calculer l'indice de PONSAR, et

- une interface de puissance 10 assurant la liaison entre l'ensemble informatique 8 et l'ensemble 2 des dispositifs et formant avec cet ensemble informatique un système électronique de traitement.

L'ensemble informatique 8 est également relié à un lecteur de disquettes 12 dans lequel est enregistré le programme permettant le fonctionnement du système de mesure automatique, à un moniteur vidéo 14 permettant l'affichage des résultats des mesures effectuées et à une imprimante 16 permettant de conserver la trace de ces résultats.

Sur la figure 2, on a représenté schématiquement l'ensemble 2 des dispositifs 4 et 6. Le dispositif 6, permettant la mesure du poids apparent, comprend un récipient 18 de forme allongée et de grande capacité, de l'ordre de 10 litres par exemple, appelé par la suite "réservoir", ainsi qu'un flacon 20, un flotteur annulaire 22 destiné à flotter dans le réservoir lorsque celui-ci contient de l'eau clarifiée, un ensemble-détecteur 24 et un moteur asynchrone 26 prévu pour déplacer l'ensemble-détecteur 24 le long du réservoir.

Le dispositif 4, permettant la mesure du volume de boue décantée, comprend un autre récipient 28 de forme allongée, appelé par la suite "éprouvette", qui a une capacité de l'ordre de trois litres par exemple, ainsi qu'un ensemble-détecteur 30 et un moteur asynchrone 32 prévu pour déplacer l'ensembledétecteur 30 le long de l'éprouvette.

Cette éprouvette a un col 34 évasé, ce qui permet de faire couler doucement l'eau chargée de boue sur le col et donc de faciliter la décantation de cette boue dans l'eau clarifiée dont l'éprouvette est destinée à être remplie.

En outre, l'éprouvette qui peut être en verre ou en Plexiglass est fermée par un couvercle 36 par exemple en Plexiglas, qui est percé d'ouvertures permettant respectivement le passage d'un tube 38 destiné à la vidange de l'éprouvette, d'un tube 40 destiné au remplissage en eau clarifiée et en eau chargée de boue de ladite éprouvette, d'un tube 42 par lequel passe l'alimentation électrique d'une sonde à électrodes 44 fixée à l'extrémité inférieure de ce tube 42, et enfin de la tige 46 d'un vérin à double effet 48 dont chaque extrémité est pourvue d'un orifice permettant son alimentation en fluide de commande qui est par exemple de l'eau.

L'extrémité du tube 38, qui se trouve dans l'éprouvette, est située au voisinage du fond de cette éprouvette, tandis que l'extrémité du tube 40, qui se trouve également dans l'éprouvette, est située au-dessus du col de cette éprouvette.

Le vérin 48 est fixé au couvercle 36 de façon que sa tige soit déplaçable parallèlement à l'axe de l'éprouvette. Le tube 42 qui est parallèle à la tige du vérin et dont l'extrémité inférieure est rendue rigidement solidaire de l'extrémité infé rieure de cette tige, par exemple au moyen d'une plaquette 49, est également déplaçable parallèlement à cet axe.

La course du vérin hydraulique 48 est prévue pour que, lorsque ce vérin est en position basse, l'extrémité inférieure de chacune des électrodes de la sonde 44 vienne au niveau correspondant à un litre et demi d'eau clarifiée dans l'éprouvette 28, et lorsque le vérin est en position haute, au niveau correspondant à deux litres et demi d'eau et de boue dans l'éprouvette 28.

L'ensemble détecteur 30 comprend une tablette 50 de forme par exemple annulaire, entourant l'éprouvette 28 et déplaçable le long de cette éprouvette. La tablette 50 porte au moins une photodiode émettrice 52, de préférence plusieurs photodiodes émettrices, orientées de façon à envoyer des faisceaux lumineux à travers l'éprouvette 28, cette dernière et l'eau clarifiée étant transparentes à la lumière émise par les photodiodes. La tablette 50 porte également, en regard des photodiodes 52, un photodécteur tel qu'un phototransistor 54 destiné à recevoir la lumière émise par les photodiodes 52 et ayant traversé l'éprouvette 28 lorsqu'elle n'en est pas empêchée par de la boue qui se trouverait dans cette éprouvette.

Le moteur 32 asynchrone, est fixé sur un support 56, placé au niveau de la partie supérieure de l'éprouvette 28. Ce moteur entraîne une vis sans fin 58 en rotation autour d'un axe parallèle à celui de l'éprouvette 28. La tablette 50 est couplée à la vis sans fin 58 de manière à monter ou à descendre le long de l'éprouvette 28 suivant le sens de rotation du moteur 32.

Le principe de la mesure du volume de boue décantée est le suivant : après avoir rempli l'éprouvette d'un litre et demi d'eau clarifiée (ce qui est détecté par la sonde 44 lorsque le vérin 48 est en position basse), puis d'un litre d'eau chargée de boue (ce qui est détecté par la sonde 44 lorsque le vérin 48 est en position haute), on laisse l'ensemble décanter pendant une demi-heure. Au bout de ce temps, la tablette est déplacée à partir du bas de l'éprouvette vers le haut de celle-ci grâce au moteur 32 (commandé par le système électronique de traitement) tandis que les photodiodes émettent des rayons lumineux. Tant que ceux-ci rencontrent la boue, qui est opaque à ces rayons lumineux, ils ne peuvent atteindre le phototransistor. Au moment où la tablette atteint le niveau de séparation de l'eau et de la boue décantée dans l'éprouvette, ces rayons lumineux peuvent traverser cette éprouvette et atteindre le phototransistor qui informe alors de ceci le système électronique de traitement. Le comptage du nombre de tours effectués par le moteur 32 permet alors, connaissant le pas de la vis sans fin 58, de déterminer la hauteur de boue décantée dans l'éprouvette, et connaissant la section de cette éprouvette, le volume de ladite boue décantée.

Pour déterminer le nombre de tours effectués par le moteur 32, on utilise un ensemble-détecteur 60-61 comprenant un photo-émetteur 60 fixé sur le support 56 (qui est traversé par l'arbre du moteur 32) et un photodétecteur 61 surmontant le photo-émetteur, ainsi qu'un doigt optiquement réflecteur 62 fixé sur l'arbre du moteur et prévu pour dévier le faisceau lumineux émis par le photo-émetteur 60 en direction du photodétecteur 61 à chaque passage devant l'ensembledétecteur 60-61, le photodétecteur 61 engendrant alors une impulsion électrique, le nombre d'impulsions électriques étant donc égal au nombre de tours effectués par le moteur 32.

Revenant au dispositif 6 de mesure du poids apparent, le réservoir 18 qui peut être en verre ou en Plexiglass est fermé par un couvercle 64 par exemple en Plexiglass, pourvu d'ouvertures permettant respectivement le passage d'un fourreau rigide 66, d'une tige 68 rendue rigidement solidaire du flacon 20 comme on le verra plus en détail par la suite, et de la tige 70 d'un vérin à double effet 72. Ce vérin est fixé au couvercle 64 de manière que sa tige soit déplaçable parallèlement à l'axe du réservoir. En outre, ce vérin 72 possède à chacune de ses deux extrémités un orifice permettant l'alimentation du vérin en fluide de commande qui est par exemple de l'eau.

Le fourreau 66 qui est parallèle à la tige du vérin 72, et dont l'extrémité inférieure est rendue solidaire de l'extrémité inférieure de la tige du vérin hydraulique 72 au moyen d'une plaquette 74 par exemple est également déplaçable parallèlement à cet axe.

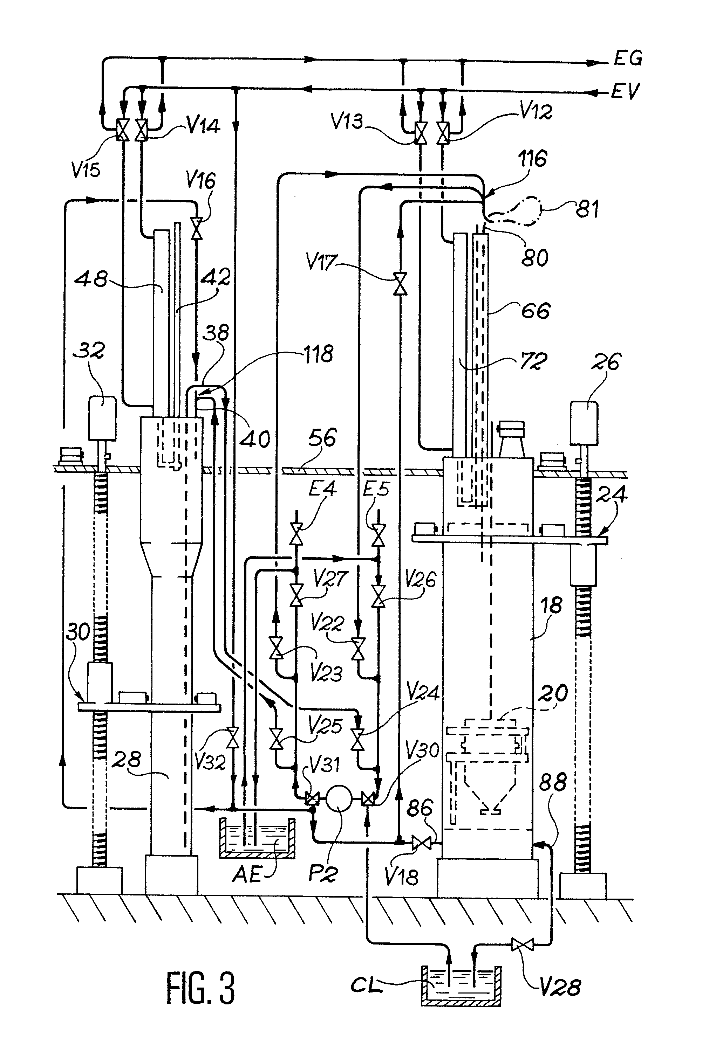

A l'intérieur du fourreau 66 sont fixés un tube 76 par lequel passe l'alimentation électrique d'une sonde à électrodes 78 fixée à l'extrémité inférieure du tube 76 ainsi qu'un conduit 80 prévu pour l'alimentation en eau clarifiée et en eau chargée de boue du flacon et pour la vidange de ce flacon. L'extrémité supérieure du conduit 80 est raccordée à une voie d'un distributeur à quatre voies 116 fixe, au moyen d'un conduit souple 81 (figure 3) de longueur suffisante pour supporter les déplacements du fourreau 66.

Le tube 76 et le conduit 80 sont fixés à chaque extrémité du fourreau 66 au moyen d'une bague, par exemple en polychlorure de vinyle.

En l'absence d'utilisation du dispositif 6, le flacon 20 repose sur un support 82, au voisinage du fond du réservoir 18. les électrodes de la sonde 78 et l'extrémité inférieure du conduit 80 dépassent de l'extrémité inférieure du fourreau 66. La course du vérin est prévue, pour que, lorsque ce vérin est en position basse, et lorsque le flacon 20 repose sur son support 82, l'extrémité inférieure de chaque électrode vienne au niveau du bord supérieur du flacon, de manière à pouvoir détecter la fin du remplissage de celui-ci au moyen d'eau clarifiée ou d'eau chargée de boue, et lorsque le vérin est en position haute, les électrodes soient à proximité du couvercle 64 du réservoir. L'extrémité inférieure du conduit 80 dépasse du fourreau 66 d'une longueur telle que lorsque le vérin est en position basse, cette extrémité inférieure du conduit 80 soit au voisinage du fond du flacon.

Le couvercle 64 ainsi que le couvercle 36 d'ailleurs, comportent des ouvertures non représentées permettant la circulation d'air entre l'intérieur et l'extérieur des récipients 18 et 28.

Le remplissage en eau clarifiée et la vidange du réservoir sont effectués par le fond de celui-ci. Pour éviter les phénomènes de bouillonnement lors du remplissage, une rainure annulaire 84 est réalisée dans le fond du réservoir. Des conduits 86 et 88 respectivement prévus pour le remplissage et la vidange du réservoir, débouchent dans cette cavité, cette dernière communiquant avec le reste du réservoir grâce à des orifices 90 de très faible diamètre (de l'ordre de 1 à 2 mm par exemple), qui traversent une plaque 89 reposant contre le fond du réservoir.

Le flacon 20 est de préférence en polyéthylène. En outre, de manière à permettre le "glis sement" et l'évacuation de bulles d'air lors de l'immersion du flacon dans l'eau clarifiée que le réservoir est destiné à contenir, le flacon comporte un fond conique 92 prolongé supérieurement par une paroi cylindrique 94 dont le bord supérieur est légèrement plus haut du coté intérieur que du côté extérieur du flacon (l'inclinaison dudit bord étant par exemple de l'ordre de 20 à 30° par rapport à un plan perpendiculaire à l'axe du flacon).

Le flacon comprend en outre un lest 96 fixé au fond de celui-ci, l'extérieur du flacon. Le lest est choisi de façon que lorsque le flacon est placé sur son support 82 et rempli d'eau clarifiée, ce flacon ne commence à s'élever en direction du haut du réservoir en cours du remplissage, que seulement lorsque le flacon est submergé.

Le support 82 du flacon comprend une collerette 98 munie de pieds lui permettant de reposer sur la plaque 89. Le flacon 20 est muni d'ergots 100 lui permettant de reposer sur la collerette 98.

Le support 82 est en outre prévu pour limiter le déplacement du flacon. A cet effet, le support 82 comprend en outre une autre collerette 102 qui est fixée à la collerette 98 et disposée au-dessus de celle-ci à une distance suffisante pour que le flacon, rempli d'eau clarifiée ou d'eau chargée de boue puisse atteindre la position d'équilibre correspondante dans le réservoir contenant de l'eau clarifiée sans que les ergots 100 ne viennent en butée contre l'autre collerette 102.

De préférence, les collerettes sont percées de trous pour faciliter le passage de l'eau clarifiée lors du remplissage du réservoir.

La tige 68 est fixée au fond du flacon et s'étend suivant l'axe de celui-ci. En variante, le lest 96 peut être fixé à l'extrémité inférieure de la tige 68, celle-ci traversant alors de façon étanche le fond du flacon.

La longueur de la tige 68 est choisie de façon que cette tige sorte très légèrement du couvercle 64 du réservoir. Une bague, par exemple en Téflon, peut être placée à l'intérieur de l'ouverture prévue pour le passage de la tige à travers le couvercle 64 afin de réduire les frottements se produisant lors du déplacement de cette tige.

Les divers remplissages et vidanges du flacon sont effectués quand ce flacon repose sur son support, le vérin 72 étant alors en position basse.

La détection de l'atteinte, par le flacon, de l'une ou l'autre de ses positions d'équilibre correspondant respectivement au flacon rempli d'eau chargée de boue et au flacon rempli d'eau clarifiée, est réalisée au moyen d'un ensemble-détecteur 103-104 qui comprend un photo-émetteur 103 surmonté d'un photodétecteur 104, cet ensemble-détecteur étant fixé sur le couvercle 64 du réservoir, de telle manière qu'il se trouve à une distance de l'ordre de quelques centimètres de l'extrémité supérieure de la tige 68 lorsque le flacon repose sur son support, distance qui est en fait inférieure à celle qui sépare les deux collerettes du support 82.

Le photo-détecteur 104 est prévu pour capter le faisceau lumineux engendré par le photo-émetteur 103 et réfléchi par la tige 68 par exemple en acier inoxydable poli lorsque l'extrémité supérieure de la tige 68 arrive au niveau de l'ensemble 103-104 du fait de l'atteinte par le flacon d'une position d'équilibre dans le réservoir en cours de remplissage. Le photodétecteur 104 engendre alors un signal. Le système électronique de traitement, alors informé par ce signal de l'atteinte de la position d'équilibre en question, commande l'arrêt du remplissage en eau clarifiée du réservoir.

L'ensemble-détecteur 24 est conçu comme l'ensemble-détecteur 30 et comprend ainsi une tablette 105 de forme par exemple annulaire, entourant le réservoir 18 et déplaçable le long de celui-ci. La tablette 105 porte au moins une photodiode émettrice 106, de préférence plusieurs photodiodes émettrices, orientées de façon à envoyer des faisceaux lumineux à travers le réservoir 18, ce dernier étant transparent à la lumière émise par chaque photodiode 106. La tablette 105 porte également, en regard des photodiodes 106, un photodétecteur tel qu'un phototransistor 108 qui est destiné à recevoir la lumière émise par les photodiodes 106 et ayant traversé le réservoir 18 tant qu'elle n'en est pas empêchée par le flotteur 22 qui est opaque à ladite lumière et qui informe de ceci le système électronique de traitement.

Le moteur 26, de type asynchrone, est fixé au niveau du couvercle 64 du réservoir, sur un support, l'ensemble éprouvette-réservoir pouvant être conçu de façon que ce support soit le support 56 du moteur 32. Le moteur 26 entraîne en rotation une vis sans fin 110 autour d'un axe parallèle à l'axe du réservoir et cette vis sans fin commande la montée ou la descente de la tablette 105 le long du réservoir suivant le sens de rotation du moteur 26.

Ces déplacements ont lieu sensiblement à partir du haut du réservoir par exemple et sont commandés par le système électronique de traitement. Connaissant le pas de la vis sans fin 110 et le nombre de tours, ce système électronique de traitement peut alors déterminer (et mémoriser) le niveau atteint par le flotteur 22.

Le nombre de tours effectués par le moteur 26 est déterminé au moyen d'un ensemble-détecteur 112-113 fixé sur le support de ce moteur 26. L'arbre de ce dernier est muni d'un doigt 114 situé au niveau de l'ensemble-détecteur 112-113. Ce dernier comprend un photo-émetteur 112 surmonté d'un photo-détecteur 113 prévu pour émettre une impulsion électrique à chaque passage du doigt 114 devant l'ensemble-détecteur 112-113, le photodétecteur 113 recevant alors le faisceau lumineux émis par le photo-émetteur 112 et réfléchi par le doigt 114 en direction du photodétecteur 113. Les impulsions issues de ce photodétecteur et correspondant aux tours effectués par le moteur 26 sont alors comptées par le système électronique de traitement qui est ainsi informé du nombre de tours du moteur 26.

Le principe de la mesure du poids apparent est le suivant : ce poids apparent est proportionnel à la différence d'immersion h, dans le réservoir rempli d'eau clarifiée, du flacon 20 respectivement rempli d'eau chargée de boue et d'eau clarifiée. Or, la différence d'immersion h est égale à la différence entre les niveaux d'eau clarifiée dans le réservoir (c'est-à-dire à la différence entre les positions du flotteur 22) correspondant respectivement aux positions d'équilibre du flacon rempli d'eau chargée de boue et du flacon rempli d'eau clarifiée. Plus précisément, le poids apparent P est relié à la différence d'immersion h par la formule suivante :

$$P = h.S.v^{-1}.d.g$$

dans laquelle S, v, d et g représentent respectivement la section de la tige 68, le volume utile du flacon (contenance du flacon qui est par exemple choisie égale à 0,5 litre), la masse volumique de l'eau clarifiée et l'accélération de la pesanteur.

En fait, le poids apparent (pour un litre d'eau chargée de boue) est exprimé en grammes et l'on ne tient donc pas compte de la quantité g de la formule ci-dessus.

L'intérêt d'utiliser le polyéthylène pour réaliser le flacon réside dans le fait que ce matériau se sature rapidement en eau et qu'en conséquence le poids du flacon est constant dans les deux phases de mesure du poids apparent (flacon rempli d'eau chargée de boue et flacon rempli d'eau clarifiée).

Ce flacon peut être également en verre qui, au contraire, n'absorbe pas l'eau lorsqu'il y est plongé, le poids du flacon restant également constant dans ce cas.

La mesure des quantités P et V nécessite le remplissage de l'éprouvette en eau clarifiée et en eau chargée de boue et la vidange de cette éprouvette, ainsi que le remplissage du réservoir en eau clarifiée et la vidange dudit réservoir, et également le remplissage du flacon en eau clarifiée et en eau chargée de boue ainsi que la vidange dudit flacon. Ces divers remplissages et vidanges sont réalisés à l'aide d'un seul ensemble hydraulique qui combine deux circuits hydrauliques respectivement appelés "circuit d'eau clarifiée" et "circuit des boues". La source d'eau clarifiée est constituée par le clarificateur CL de la station d'épuration et la source d'eau chargée de boue est constituée par l'aérateur AE de cette station d'épuration.

Le circuit des boues est le suivant :

L'eau chargée de boue est pompée dans l'aérateur AE par une pompe référencée P2. Une canalisation part de l'aérateur et aboutit à une voie d'une électrovanne à deux voies V26. Trois dérivations sont reliées en parallèle à la seconde voie de cette électrovanne :

- une première dérivation aboutissant à une voie d'une électrovanne à deux voies V22 dont la seconde voie aboutit à une première voie d'un distributeur à quatre voies 116, dont la deuxième voie est reliée au conduit 80 par l'intermédiaire d'un conduit souple 81,

- une deuxième dérivation aboutissant à une voie d'une électrovanne à deux voies V24 dont la seconde voie est reliée au conduit 38, et

- une troisième dérivation reliée à une première voie d'une électrovanne à trois voies V30 dont une deuxième voie aboutit à l'entrée de la pompe.

La sortie de la pompe P2 est reliée à une première voie d'une électrovanne à trois voies V31. Une deuxième voie de celle-ci est reliée à une voie d'une électrovanne à deux voies V27 dont la seconde voie est reliée à l'aérateur.

Sur la canalisation reliant la pompe P2 à l'électrovanne V27, et à partir de la pompe P2, on trouve successivement :

- une première dérivation aboutissant à une voie d'une électrovanne à deux voies V25 dont la seconde voie est reliée à une première voie d'un distributeur à trois voies 118, dont la deuxième voie est reliée au conduit 40, et

- une seconde dérivation aboutissant à une voie d'une électrovanne à deux voies V23 dont la seconde voie est reliée à la troisième voie du distributeur 116.

Pour le circuit des boues, on a alors les divers états suivants et pour chaque état, l'ouverture ou la fermeture des électrovannes est déterminée en conséquence :

- attente : de AE vers V26 vers V30 vers P2 vers V31 vers V27 vers AE

- remplissage du flacon en eau chargée de boue : AE vers V26 vers V30 vers P2 vers V31 vers V23 vers distributeur 116

- remplissage de l'éprouvette en eau chargée de boue : AE vers V26 vers V30 vers P2 vers V31 vers V25 vers distributeur 118

- vidange de l'éprouvette : du conduit 38 vers V24 vers V30 vers P2 vers V31 vers V27 vers AE

- vidange du flacon : du conduit 80 vers le distributeur 116 vers V22 vers 30 vers P2 vers V31 vers V27 vers AE.

On a également prévu des évents par électrovannes E4 et E5 respectivement montés en dérivation sur les canalisations reliant l'électrovanne V26 et l'électrovanne V27 à l'aérateur.

Le circuit d'eau clarifiée comprend l'électrovanne V30 dont la troisième voie est reliée par une canalisation au clarificateur, la pompe P2 et l'électrovanne V31. Quatre dérivations sont reliées en parallèle à la troisième voie ae l'électrovanne V31 :

- une première dérivation aboutissant à une voie d'une électrovanne à deux voies V16 dont la seconde voie est reliée à la troisième voie du distributeur 118,

- une deuxième dérivation aboutissant à une voie d'une électrovanne à deux voies V17 dont la seconde voie est reliée à la quatrième voie du distributeur 116,

- une troisième voie aboutissant à une voie d'une électrovanne à deux voies V18 dont la seconde voie est reliée au conduit 86, et

- une quatrième voie aboutissant à une voie d'une électrovanne à deux voies V32 dont la seconde voie aboutit, comme on le verra par la suite, à un circuit "d'eau de ville" (eau propre sous pression fournie par un réseau de distribution d'eau).

Ainsi, l'eau clarifiée peut-elle être aspirée, par la pompe P2, dans le clarificateur CL à travers l'électrovanne V30, et distribuée par l'électrovanne V31, respectivement et suivant besoin :

- dans le flacon 20 par V17,

- dans l'éprouvette 28 par V16, et

- dans le réservoir 18 par V18.

La vidange de l'eau clarifiée susceptible d'être contenue dans le réservoir 18 se fait par gravité à partir du conduit 88, en direction du clarificateur, à travers une électrovanne à deux voies V28.

Comme on l'a déjà indiqué, la vidange de l'eau clarifiée contenue dans le flacon (respectivement l'éprouvette) se fait par l'intermédiaire du circuit des boues, à l'aide de la pompe P2 et de l'électrovanne V22 (respectivement V24).

Il existe un troisième circuit permettant l'utilisation de l'eau de ville par exemple pour procéder après une mesure, au rinçage des circuits, du flacon, de l'éprouvette et du réservoir. Le remplissage de ces derniers en eau de ville s'effectue par l'intermédiaire de l'électrovanne à deux voies V32 dont la seconde voie est reliée à la canalisation d'arrivée d'eau de ville EV. La vidange du réservoir se fait par gravité à l'aide de V28 et la vidange de l'éprouvette ou du flacon se fait en utilisant le circuit des boues comme indiqué plus haut.

L'eau de ville est également fournie aux deux vérins par l'intermédiaire d'électrovannes à trois voies V12, V13, V14 et V15, afin de permettre le fonctionnement de ces vérins.

Plus précisément, l'eau de ville est envoyée en parallèle aux entrées respectives des électrovannes V12, V13, V14 et V15. L'électrovanne à trois voies V12 servant à la mise en position basse du vérin 72, a l'une de ses deux sorties reliée à l'orifice de ce vérin 72, correspondant à la mise en position basse dudit vérin. L'électrovanne à trois voies V13, servant à la mise en position haute du vérin 72, a l'une de ses deux sorties reliée à l'orifice de ce vérin 72, correspondant à la mise en position haute dudit vérin.

L'électrovanne à trois voies V14, servant à la mise en position basse du vérin 48 associé à l'éprouvette, a l'une des ses deux sorties reliée à l'orifice de ce vérin 48, correspondant à la mise en position basse dudit vérin 48. L'électrovanne V15, servant à la mise en position haute du vérin 48, a l'une de ses deux sorties reliée à l'orifice du vérin 48 correspondant à la mise en position haute de ce vérin 48.

Les secondes voies de sortie des électrovannes à trois voies V12, V13, V14 et V15 sont reliées à une canalisation aboutissant à un égout EG.

On notera que les dispositifs 4 et 6 reposent sur un bâti commun 120, sur lequel reposent également les paliers respectifs 122 et 124 des vis sans fin 58 et 110.

L'interface de puissance 10 (figure 1), dont le contenu n'est pas représenté, comprend un ensemble de relais destinés à la commande des électrovannes et des moteurs 26 et 32, des circuits électroniques respectivement associés aux sondes à électrodes 44 et 78, des circuits à relais permettant de relier respectivement les ensembles-détecteurs 52-54, 103-104 et 106-108 à l'ensemble informatique 8 ainsi que deux circuits à relais respectivement associés aux ensembles-détecteurs 60-61 et 112-113, et enfin différentes alimentations fournissant les tensions et les courants nécessaires au fonctionnement de l'électronique et des éléments électriques de l'armoire contenant les dispositifs 4 et 6.

L'ensemble informatique 8 (figure 1) comprend un ordinateur associé à une carte d'entrées-sorties (non représentés). Les signaux (0 ou 5V) issus de la carte d'entrées-sorties ne peuvent commander directement les électrovannes ou les moteurs 26 et 32. Cette commande est donc réalisée par l'intermédiaire des relais mentionnés plus haut (relais de puissance) qui sont capables de commuter des courants importants et des tensions élevées (voir document I). Chacun des moteurs 26 et 32 est commandé par deux relais correspondant respectivement aux deux sens de rotation du moteur.

En outre, contrairement aux autres électrovannes du système de mesure représenté sur la figure 3, les électrovannes E4 et E5, qui permettent de "vider" les canalisations sur lesquelles elles sont montées, lors de l'arrêt du système de mesure, ne sont pas associées à des relais de puissance mais sont alimentées (fermées) dès que le système de mesure est sous tension et ouvertes dès que le système de mesure est hors tension (n'est pas utilisé).

La commande des électrovannes V16, V17, V18, V22, V23, V24, V25, V26, V27, V28, V30, V31 et V32 ne pose pas de problème particulier.

Les électrovannes à trois voies V12, V13, V14 et V15, sont commandées de façon appropriée (et classique) pour le bon fonctionnement des vérins auxquels elles sont associées : pour un vérin donné en fonctionnement, l'une des électrovannes lui étant associée doit permettre l'entrée d'eau dans le vérin tandis que l'autre électrovanne associée doit permettre l'évacuation d'eau du vérin.

On notera que l'électrovanne V27 doit être fermée par l'ouverture de l'électrovanne V23 ou de l'électrovanne V25 et lorsque les électrovannes V23 et V25 sont fermées, l'électrovanne V27 doit être ouverte. Ces conditions sont réalisées à partir d'une porte logique OU.

De même, lorsque l'électrovanne V26 est ouverte, les deux électrovannes V22 et V24 doivent être fermées et l'ouverture de l'une ou l'autre de ces électrovannes V22 et V24 doit entraîner la fermeture de l'électrovanne V26. Ces conditions sont réalisées à partir d'une porte logique OU.

Le photodétecteur 54 commande un circuit à relais dont la sortie est reliée à l'ensemble informatique et qui est prévu pour informer ce dernier de l'atteinte par la tablette 50 du niveau de séparation de l'eau et de la boue décantée dans l'éprouvette.

Le photodétecteur 108 commande également un circuit à relais dont la sortie est reliée à l'ensemble informatique et qui est prévu pour informer ce dernier de la position du flotteur 22.

De même, le photodétecteur 104 informe, par l'intermédiaire d'un circuit à relais, l'ensemble informatique 8, de l'atteinte par le flacon de chacune de ses positions d'équilibre.

Les impulsions engendrées par chaque photodétecteur 61 ou 113 sont fournies, par l'intermédiaire d'un circuit à relais, au système électronique de traitement dans lequel elles sont comptées.

Les sondes de détection à électrodes 44 et 78 peuvent être réalisées comme la sonde référencée 66 dans le document I. Ainsi, les électrodes de chacune des sondes 44 et 78 peuvent être reliées à l'ensemble informatique par l'intermédiaire d'un circuit du genre de celui qui est représenté sur la figure 13 du document I.

Pour éviter que la pompe P2 ne tourne à vide, le temps de vidange de l'éprouvette est programmé, aucun capteur de vidange de cette éprouvette n'étant donc nécessaire. Les positions "haute" et "basse" de chacune des tablettes 50 et 105 sont détectées par quatre microcontacts (un par position et par tablette) non représentés, chacun d'eux étant apte à fournir une indication 0 ou 5V directement à l'ensemble informatique.

Le programme de gestion du système de mesure automatique de l'indice de PONSAR, objet de l'invention, comprend tout d'abord une étape d'initialisation des entrées-sorties de l'ensemble informatique suivie d'un contrôle de la "position de départ" du dispositif de mesure du volume et du dispositif de mesure du poids apparent :

- on vérifie au moyen de la sonde associée au vérin correspondant à l'éprouvette qu'il n'y a pas d'eau au niveau où se trouve cette sonde, sinon on vide l'éprouvette,

- on vérifie que la tablette correspondant au réservoir est en position haute sinon on la met dans cette position,

- on vérifie que la tablette correspondant à l'éprouvette est en position basse sinon on la met dans cette position,

- on vérifie que le vérin correspondant au réservoir est en position haute sinon on le met dans cette position, et

- on vérifie que le vérin correspondant à l'éprouvette est en position basse sinon on le met dans cette position.

Après quoi, les phases successives suivantes ("processus de mesure") que comprend le programme de gestion sont effectuées :

   1 - vidange du réservoir (entre deux utilisations du système de mesure, objet de l'invention, il est préférable de remplir suffisamment le réservoir pour que le flacon qui se trouve au fond de celui-ci soit submergé)

   2 - nettoyage (c'est-à-dire remplissage par de l'eau clarifiée) puis vidange (du réservoir et de l'éprouvette)

   3 - remplissage de l'éprouvette en eau clarifiée (1, 5 l)

   4 - montée du vérin de l'éprouvette

   5 - remplissage de l'éprouvette en eau chargée de boue (1 l) et déclenchement d'une temporisation (temps d'attente) de 30 minutes

   6 - descente du vérin du réservoir

   7 - vidange du flacon

   8 - remplissage du flacon en eau chargée de boue

   9 - remplissage du réservoir en eau clarifiée jusqu'au bord supérieur du flacon

   10 - attente pendant un temps déterminé (choisi égal à 3 ou 4 minutes) pour la décantation des boues dans le flacon (afin d'éviter qu'elles ne s'en échappent lors de la submersion du flacon)

   11 - remontée du vérin du réservoir

   12 - remplissage du réservoir en eau clarifiée jusqu'à ce que le flacon décolle et atteigne sa position d'équilibre

13 - descente de la tablette du réservoir

14 - lecture du niveau d'eau dans le réservoir et affichage du résultat

15 - remontée de la tablette du réservoir

16 - vidange du réservoir jusqu'à ce que le niveau d'eau dans celui-ci soit inférieur au bord supérieur du flacon

17 - descente du vérin du réservoir

18 - vidange du flacon

19 - remplissage du flacon en eau clarifiée (en vue de le nettoyer)

20 - vidange du flacon

21 - remplissage du flacon en eau clarifiée

22 - remontée du vérin du réservoir

23 - remplissage du réservoir en eau clarifiée jusqu'à décollement du flacon et atteinte par celui-ci de sa position d'équilibre

24 - descente de la tablette du réservoir

25 - lecture du niveau d'eau dans le réservoir et affichage du résultat

26 - remontée de la tablette du réservoir

27 - vidange totale du réservoir

28 - descente du vérin du réservoir

29 - vidange du flacon

30 - calcul du poids apparent des boues, affichage du résultat puis attente de la fin de la temporisation de 30 minutes

31 - montée de la tablette de l'éprouvette

32 - lecture du niveau de séparation boue-eau clarifiée dans l'éprouvette

33 - descente de la tablette pour remise en place de celle-ci

34 - calcul du volume de décantation, affichage de celui-ci, calcul de l'indice de PONSAR et affichage de celui-ci

35 - vidange de l'éprouvette

36 - remplissage de l'éprouvette en eau de ville (2,5 l) pour nettoyage de cette éprouvette

37 - vidange de l'éprouvette

38 - descente du vérin de l'éprouvette en position basse

39 - remplissage du flacon en eau de ville pour nettoyage de ce flacon

40 - remontée du vérin du réservoir

41 - remplissage du réservoir en eau de ville jusqu'à submersion du flacon

42 - arrêt du programme.

Comme on l'a indiqué dans le document I, un sous-programme permet de chronométrer les temps d'attente.

La fin des étapes 9 et 16 est également détectée par "chronométrage" au moyen de ce sous-programme qui permet aussi de chronométrer les temps de vidange du flacon et de l'éprouvette.

Par ailleurs, après avoir déterminé le nombre N de tours effectués par le moteur associé à l'éprouvette, l'ordinateur calcule le volume de boue décantée V par la formule suivante :

$$V = (p.s.N) + VO$$

dans laquelle p et s représentent respectivement le pas de la vis sans fin associée à l'éprouvette et la section droite de l'éprouvette (entre le fond et le col 34 de cette éprouvette). La quantité VO est un volume initial dû au fait que la tablette associée à l'éprouvette ne part pas exactement d'une hauteur nulle. Cette quantité VO peut être déterminée lors de l'étalonnage du système automatique de mesure.

## Revendications

1. Appareil de mesure du poids apparent d'une boue chargeant un liquide, caractérisé en ce qu'il comprend :
- un récipient (18),
- un flacon mobile (20), muni d'un moyen (68) lui permettant d'atteindre, à partir du fond du récipient, rempli de liquide clarifié, deux positions d'équilibre correspondant respectivement au flacon rempli de liquide clarifié et au flacon rempli de liquide chargé de boue, le flacon étant en outre conçu pour s'élever, lorsqu'il est rempli de liquide clarifié ou de liquide chargé de boue, dans le récipient rempli de liquide clarifié, seulement lorsque ledit flacon est submergé,
- des moyens de remplissage en liquide clarifié (P2, V17), de remplissage en liquide chargé de boue (P2, V23) et de vidange (P2, V22, V27) du flacon (20),
- des moyens de remplissage en liquide clarifié (P1, V18) du récipient (18), jusqu'à ce que le flacon, rempli de liquide clarifié ou de liquide chargé de boue, ait atteint la position d'équilibre correspondante, et de vidange (V28) de ce récipient,
- des premiers moyens de détection (22, 26, 106, 108, 110), de type optoélectronique, aptes à fournir un signal électrique fonction du niveau de liquide clarifié dans le récipient (18), et
- un système électronique de traitement (8, 10) prévu pour déterminer le poids apparent d'un volume de liquide chargé de boue, pesé dans le liquide clarifié, à partir de signaux électriques correspondant aux niveaux de liquide clarifié dans le récipient (18), lorsque le flacon (20) est rempli respectivement de liquide chargé de boue et de liquide clarifié, en commandant de façon appropriée les moyens de remplissage et de vidange du récipient et du flacon.

2. Appareil selon la revendication 1, caractérisé en ce que le flacon (20) a un fond conique (92) muni d'un lest (96) et prolongé supérieurement par une paroi cylindrique (94) dont le bord supérieur est légèrement plus haut du côté intérieur que du côté extérieur du flacon.

3. Appareil selon l'une quelconque des revendications 1 et 2, caractérisé en ce que le flacon (20) est en un matériau qui, lorsqu'il est plongé dans le liquide clarifié, n'absorbe pas celui-ci ou, au contraire, se sature rapidement en ce liquide clarifié.

4. Appareil selon l'une quelconque des revendications 1 à 3, caractérisé en ce qu'il comprend en outre des moyens (98, 102) de support du flacon et de limitation des déplacements de ce flacon en direction du haut du récipient (18).

5. Appareil selon l'une quelconque des revendications 1 à 4, caractérisé en ce qu'il comprend en outre une sonde à électrodes (78), prévue pour informer le système électronique de traitement (8, 10) du remplissage du flacon (20), cette sonde étant déplaçable et rendue rigidement solidaire d'un conduit (80) prévu pour les remplissages et la vidange du flacon.

6. Appareil selon la revendication 5, caractérisé en ce qu'il comprend un premier vérin à double effet (72), prévu pour déplacer la sonde (78) et le conduit (80).

7. Appareil selon l'une quelconque des revendications 1 à 6, caractérisé en ce que ledit moyen dont est muni le flacon est une tige (68) dont l'extrémité inférieure est rigidement solidaire du flacon (20), et dont la longueur est prévue pour dépasser le niveau maximum de liquide clarifié susceptible d'être contenu dans le récipient (18).

8. Appareil selon l'une quelconque des revendications 1 à 7, caractérisé en ce qu'il comprend des deuxièmes moyens de détection (68, 103, 104), prévus pour détecter l'atteinte par le flacon (20), rempli de liquide clarifié ou de liquide chargé de boue, de la position d'équilibre correspondante, en vue de commander l'arrêt du remplissage du récipient (18).

9. Appareil selon les revendications 7 et 8, caractérisé en ce que les deuxièmes moyens de détection comprennent un moyen photo-émetteur (103), un moyen photodétecteur (104) et ladite tige (68), et en ce que l'extrémité supérieure de la tige (68) est prévue pour dévier un faisceau lumineux provenant du moyen photo-émetteur (103) en direction du moyen photodétecteur (104), lorsque cette extrémité supérieure rencontre ce faisceau lumineux.

10. Appareil selon l'une quelconque des revendications 1 à 9, caractérisé en ce que les premiers moyens de détection comprennent un flotteur (22) prévu pour flotter dans le récipient (18), à la surface du liquide clarifié, lorsque le récipient en contient, un ensemble-détecteur comportant au moins un photo-émetteur (106) et au moins un photodétecteur (108), rendus solidaires et placés en regard l'un de l'autre, de part et d'autre du récipient, le flotteur étant opaque à la lumière que chaque photo-émetteur est capable d'émettre, le récipient étant transparent à cette lumière, et des moyens de déplacement (26, 110) de cet ensemble-détecteur, aptes à déplacer celui-ci le long du récipient, sensiblement à partir du haut de ce dernier, et commandés par le système électronique de traitement (8, 10), le photodétecteur étant destiné à informer ce système électronique de traitement de la position du flotteur.

11. Système se mesure de l'indice de PONSAR d'une boue chargeant un liquide, caractérisé en ce qu'il comprend :

- l'appareil de mesure du poids apparent selon l'une quelconque des revendications 1 à 10,
- un autre récipient (28),
- des moyens de remplissage en liquide clarifié (P2, V16), de remplissage en liquide chargé de boue (P2, V25, V26) et de vidange (P2, V24, V27) de cet autre récipient,
- des troisièmes moyens de détection (32, 52, 54, 58) aptes à fournir d'autres signaux électriques, fonctions du niveau de boue décantée dans ledit autre récipient (28) préalablement rempli de liquide clarifié et de liquide chargé de boue, et en ce que le système électronique de traitement (8, 10)) est en outre prévu pour déterminer, à partir de ces autres signaux, le volume de boue décantée dans ledit autre récipient, correspondant à une quantité prédéterminée de liquide chargé de boue, et pour déterminer également l'indice de PONSAR de la boue, en utilisant ledit poids apparent et ledit volume de boue décantée, en commandant de façon appropriée les moyens de remplissage et de vidange.

12. Système selon la revendication 11, caractérisé en ce que les troisièmes moyens de détection comprennent un autre ensemble-détecteur comportant au moins un photo-émetteur (52) et au moins un photodétecteur (54), rendus solidaires et placés en regard l'un de l'autre, de part et d'autre dudit autre récipient (28), ce dernier et le liquide clarifié étant transparents à la lumière que chaque photo-émetteur est capable d'émettre et la boue étant opaque à cette lumière, et des moyens de déplacement (32, 58) de cet autre ensemble-détecteur, aptes à déplacer celui-ci le long dudit autre récipient (28), sensiblement à partir du fond de ce dernier, et commandés par le système électronique de traitement (8, 10), le photodétecteur dudit autre ensemble-détecteur étant destiné à informer ce système électronique de traitement de la position de la surface de séparation entre la boue décantée et le liquide clarifié dans ledit autre récipient.

13. Système selon l'une quelconque des revendications 10 à 12, caractérisé en ce que, la quantité prédéterminée de liquide chargé de boue résultant de l'adjonction à une quantité donnée de liquide clarifié atteignant un premier niveau dans ledit autre récipient (28), d'une quantité donnée de liquide chargé de boue atteignant un second niveau dans ledit autre récipient, le système de mesure comprend en outre une autre sonde à électrodes (44) déplaçable entre ces premier et second niveaux, et prévue pour informer le système électronique de traitement (8, 10) de l'atteinte, par le liquide, successivement de ces premier et second niveaux, en vue de commander l'arrêt des remplissages correspondants.

14. Système selon la revendication 13, caractérisé en ce qu'il comprend en outre un autre vérin à double effet (48), prévu pour déplacer ladite autre sonde (44) entre les premier et

second niveaux.

FIG. 1

FIG. 2

0296029

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 210 916  (COMMISSARIAT A L'ENERGIE ATOMIQUE) <br> * En entier * <br> --- | 1-5,7-13 | G 01 N  9/12 <br> G 01 G  5/02 <br> G 01 G  17/04 |
| A,D | FR-A-2 284 108  (Y.M. PONSAR) <br> * Revendications 1-3,5,6,8,9,11; figures 1-5 * <br> --- | 1-3,11 | |
| A | BE-A-  428 167  (A. ERRERA) <br> * Page 3, lignes 6-17; figures 1,2 * <br> ----- | 1,9 | |

DOMAINES TECHNIQUES RECHERCHES (Int. Cl.4)

G 01 G
G 01 N

Le présent rapport a été établi pour toutes les revendications

| Lieu de la recherche | Date d'achèvement de la recherche | Examinateur |
|---|---|---|
| LA HAYE | 09-09-1988 | GANCI P.A. |

EPO FORM 1503 03.82 (P0402)